# EUROPEAN PATENT APPLICATION

(11) **EP 1 271 312 A2**
(43) Date of publication of application: **02.01.2003**
(21) Application number: 02013180.1
(22) Date of filing: 14.06.2002
(51) Int. Cl.: G06F 9/45

(54) **System and method for split-stream dictionary program compression and just-in-time translation**

(30) Priority: 27.06.2001 US 894859
(71) Applicant: MICROSOFT CORPORATION, Redmond, Washington 98052-6399 (US)
(72) Inventor: Lucco, Steven E., Bellevue, Washington 98004 (US)
(74) Representative: Grünecker, Kinkeldey, Stockmair & Schwanhäusser Anwaltssozietät

(57) **Abstract**

A split-stream dictionary (SSD) program compression architecture has a dictionary builder, a dictionary compressor, and a SSD item generator. The dictionary builder constructs a dictionary containing two types of entries: (1) base entries for each instruction in an input program and (2) sequence entries for sequences of multiple instructions (e.g., 2-4 instructions) that are used multiple times in the program. The dictionary compressor compresses the dictionary by separately compressing the base entries and the sequence entries independently of one another. The SSD item generator generates a stream of items that represent the program instructions in terms of the base entries and the sequence entries. The SSD program compression architecture outputs the compressed dictionary and the stream of SSD items referencing the dictionary. The SSD program compression architecture supports a two-phase just-in-time (JIT) translation having a dictionary decompression phase and a copy phase. In the decompression phase, the VM loads and decompresses the dictionary. In the copy phase, the VM expands each basic block by copying dictionary entries into a native code buffer, thereby effectively translating the SSD items back into the instructions.

## Description

### TECHNICAL FIELD

This invention relates to systems and methods for compressing computer programs. More particularly, this invention relates to systems and methods for transforming a computer program into a compact, interpretable form that can be subsequently decompressed at basic-block granularity.

### BACKGROUND

Processing and memory are two of the more precious computing resources. Techniques that improve efficiencies in processing utilization and/or memory consumption are generally considered beneficial for computer architectures. Program compression is one type of technique that aims to reduce the amount of memory needed to store a program, without losing the primary functionality of the program. However, program compression may come at a cost of increased processing overhead, as the computer must initially utilize processing resources to decompress a compressed program, either partially or fully, before actually running the program.

### Program Size v. Execution Time

One goal in designing computer systems is to increase the ability to trade program size for program execution time. Specifically, the goal is to enable computer system designers to store native or virtual machine programs using a smaller amount of system ROM (Read Only Memory), RAM (Random Access Memory), or disk space, while incurring an insignificant impact on program execution time.

Handheld computing devices are one class of devices that benefits greatly from such design goals. For example, currently popular handheld organizer products can have as little as two megabytes ROM and two megabytes RAM to hold all system software, plus add-on software and data. The small-size memory limits the number and types of applications suitable for these organizers. Since data competes directly with programs for space, the number of contacts or maps that the device can hold depends directly on the amount of space the device requires to store its programs. In embedded systems with even tighter constraints on program space, such as MEMS, the degree to which one can compress system programs determines the capabilities one can pack into the device. For discussion on MEMS, the reader is directed to J. Kahn, R.H. Katz, K.Pister, "MOBICOM challenges: mobile networking for 'Smart Dust'," ACM MOBICOM Conference, Seattle, WA, 8/99.

On desktop systems, program compression is used to increase system performance by taking advantage of large differences in access time among components of the memory hierarchy.

The effects of program compression become more pronounced when computer systems use RISC (Reduced Instruction Set Code) or VLIW instruction sets. These fixed-length program encodings are less dense than variable length x86 bytecodes supported by the x86 processing architecture from Intel Corporation. For example, early compiler implementations suggest that programs compiled for the Intel IA64 (Itanium) architecture will require two to three times the code space of the same program compiled for the x86 processor.

Designers of embedded system processors have attempted to increase program encoding density by introducing 16-bit versions of their instruction sets or by adding complex features to their designs. For example, the ARM computer architecture includes a 16-bit instruction set, called "Thumb", which is used to provide program compression. The ARM architecture converts Thumb instructions back to ARM instructions during the decode pipeline stage, sacrificing chip area in an attempt to increase program density. Similarly, ARM departs from RISC discipline by spending chip area on features, such as auto-increment addressing, designed to reduce code size. For more discussion on the ARM computer architecture, the reader is directed to S. Furber, *ARM System Architecture*, Addison-Wesley, ISBN 0-201-40352-8.

Hence, the current evolution of embedded system processor designs illustrates the pressure that program storage cost exerts on embedded processor architecture. In adding complex features such as the Thumb instruction set or auto-increment addressing, ARM designers implicitly trade program density against program execution time.

In contrast to these fixed-hardware approaches, the inventor has developed a compression technique that reduces a program's use of ROM, RAM, and disk space without significantly increasing a program's execution time. In particular, the inventor's compression technique uses a dictionary. The following section provides some general understanding of dictionary-based compression techniques.

### Dictionary-Based Compression

Many compression techniques encode their input using a dictionary. In general, a compression dictionary stores common input patterns. All or part of a compressed input consists of compact references to the dictionary. When the dictionary does not depend on the input, it is called "external". If the dictionary depends on input but does not change during decompression, it is referred to as "static"; otherwise, the dictionary is called "dynamic".

Lempel-Ziv (LZ) compression is a well-known compression technique that uses a dynamic dictionary. As LZ decompresses data, it stores each novel sequence of bytes in a dictionary. Items farther back in the stream of compressed data can refer to these implicitly generated dictionary entries using a byte offset and a length.

Because LZ compression uses a dynamic dictionary, it is stream-oriented. This unfortunately imposes a limitation in that an LZ decompressor cannot randomly access and decode a particular basic block or function. Arithmetic coding strategies, which have yielded the most effective archival program compression solutions known to us, share this limitation with LZ compression.

In addition, compression methods such as LZ are byte-oriented, meaning that they assess similarities among input patterns in terms of byte comparisons. However, most information within a virtual or native machine language program (e.g., opcodes, register numbers) is not aligned on byte boundaries.

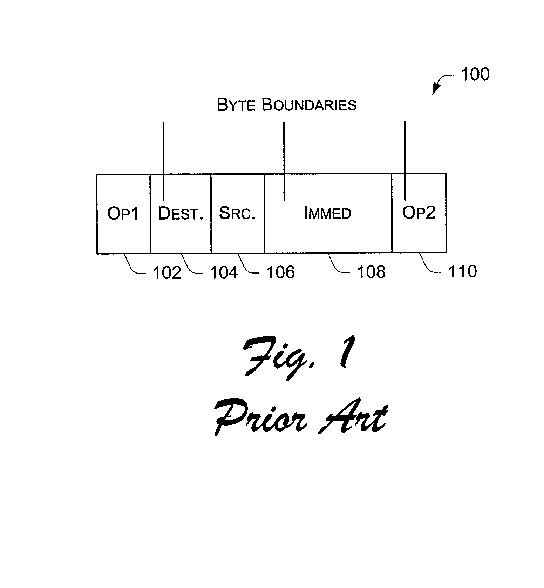

Fig. 1 illustrates a portion of a virtual or native machine language program 100 that includes a first opcode 102, a destination address 104, a source address 106, an immediate field 108, and a second opcode 110. Notice that the byte boundaries do not align conveniently with the program 100.

To support fast in-place interpretation or just-in-time (JIT) translation of compressed programs, there is a need to design a program compression scheme capable of fast decompression at basic block granularity.

For discussion purposes, any program compression scheme that is capable of fast decompression at basic block granularity is designated as "interpretable". The class of interpretable program compression schemes can be further clarified by describing why some related efforts―such as Java class files, ANDF programs, and slim binaries―do not fit into this classification. Java class files are directly interpretable, but are not compressed; they are often larger than the native-compiled version of a given Java class. Further, Java class files cannot efficiently represent programs written in many other programming languages, such as C++. ANDF programs and slim binaries represent programs at a high level of abstraction, similar to abstract syntax trees (ASTs). Hence, they represent programs in a form that requires significant further compilation following decompression. For this reason, AST representations such as these are not examples of interpretable program compression.

Among previous approaches to interpretable program compression, the Byte-coded RISC (or "BRISC") program format is the most effective. BRISC compresses programs to about 61% of their optimized x86 representation and supports JIT translation at over five megabytes per second, as reported in J. Ernst, W. Evans, C. Fraser, S. Lucco, and T. Proebsting, "Code compression," PLDI '97:358-365, 6/97. Like the best stream-oriented program compression methods, BRISC excels by considering non-byte-aligned quantities in its input stream.

Program compression methods that consider the individual fields within instructions are called "split-stream" methods. BRISC and other split-stream compression techniques conceptually split the input stream of instructions into separate streams, one for each type of instruction field.

One drawback of BRISC, however, is that it is somewhat difficult to implement. BRISC requires the generation and maintenance of a corpus-derived set of instruction patterns designed to capture common opportunities for combining adjacent opcodes and for specializing opcodes to reflect frequently occurring instruction-field values. A virtual machine implementing BRISC will have to load and decode this external dictionary of instruction patterns (approximately 2000 instruction patterns or 150 kilobytes of data). Also, systems implementing BRISC must maintain a separate program to generate the external dictionary of instruction patterns from a training corpus of representative programs. Further, BRISC's compression effectiveness depends on the applicability of the training corpus.

Accordingly, there remains a need for an interpretable compression scheme that is simpler to use implement and improves upon the BRISC program format.

### SUMMARY

A split-stream dictionary (SSD) program compression architecture combines the advantages of a split-stream dictionary together with an attribute of large programs in that the programs frequently re-use small sequences of instructions.

In one implementation, SSD program compression architecture has a dictionary builder, a dictionary compressor, and a SSD item generator. The dictionary builder constructs a dictionary containing two types of entries: (1) base entries for each instruction in an input program, and (2) sequence entries for sequences of multiple instructions that are used multiple times in the program. In one described implementation, the sequence entries represent short sequences consisting of two to four instructions.

The dictionary compressor compresses the dictionary by handling the base entries and sequence entries independently of one another. For the base entries, the dictionary compressor first sorts the base entries by their opcodes to create instruction groups, such that there is one instruction group for each opcode. The dictionary compressor then sorts the base entries within each instruction group according to size of individual instruction fields and outputs each instruction field as a separate stream. For the sequence entries, the dictionary compressor constructs tree structures for corresponding sequences of instructions. There is one tree for each instruction that can start a sequence.

The SSD item generator generates a stream of items that represent the program instructions in terms of the base entries and the sequence entries. The item generator compares progressively smaller strings of multiple instructions from the input program, where each string begins with a first instruction, to the sequence entries in the dictionary. If any string matches a particular sequence entry, the item generator produces an SSD item that references the particular sequence entry in the dictionary. If the strings fail to match any of the sequence entries, the item generator produces an SSD item that references a base entry associated with the first instruction.

The SSD program compression architecture outputs the compressed dictionary and the stream of SSD items referencing the dictionary.

The SSD program compression architecture supports just-in-time (JIT) translation. The SSD decompression can be incorporated into virtual machine (VM) systems that incrementally translate compressed programs into native instructions. The decompression is divided into two phases: (1) a dictionary decompression phase and (2) a copy phase. In the first phase, the VM loads and decompresses the dictionary, which maps 16-bit indices to sequences of one to four instructions. In the copy phase, the VM expands each basic block by copying dictionary entries into a native code buffer, thereby essentially translating the SSD items back into the instructions.

In this manner, the SSD program compression supports graceful degradation of program execution times as JIT-translation buffers shrink. Because phase two translation consists mostly of copying memory blocks, it is fast. Once the virtual machine pays the fixed cost of dictionary decompression, it can translate and re-translate parts of the program at this phase two translation speed. This feature enables a virtual machine to achieve reasonable program execution times even when using a native code buffer significantly smaller than the program being executed.

In experiments, split-stream dictionary program compression was used to reduce the number of code pages required to start the "Word97" word processing program from Microsoft Corporation. Because SSD yields decompression speed of 7.8 megabytes per second on a 450MHz Pentium II processor chip from Intel Corporation, disk latency dominated decompression time and the "Word97" word processing program started 14% faster than the same version of "Word97" compiled to optimized x86 instructions.

SSD program compression was also used to compress a test suite of programs compiled for the Omniware virtual machine (OmniVM), including Microsoft "Word97" and the spec95 benchmarks. SSD compressed the test suite to an average of 47% the size of their optimized x86 representations. When incrementally decompressed, JIT-translated, and executed by the OmniVM, these programs ran an average of 6.6% slower than the optimized x86 versions, demonstrating that SSD supports fast JIT-translation of processor-neutral code. Further, execution-time profiles of these programs revealed that SSD decompression and JIT translation contributed no more than 0.7% to any program's execution time; limitations on JIT-translated code quality accounted for most of the execution time overhead.

### BRIEF DESCRIPTION OF THE DRAWINGS

Fig. 1 illustrates a portion of a virtual or native machine language program.
Fig. 2 is a block diagram of a split-stream dictionary program compression architecture that compresses a program into a split-stream dictionary and a stream of items referencing the dictionary.
Fig. 3 is a block diagram of an exemplary computer that implements split-stream dictionary program compression architecture of Fig. 2.
Fig. 4 is a flow diagram of a split-stream dictionary program compression process implemented by the architecture of Fig. 2.
Fig. 5 is a flow diagram of a dictionary construction process that implements block 404 of the Fig. 4 process.
Figs. 6 and 7 are flow diagram of a two-part dictionary compression process that implements block 406 of the Fig. 4 process.
Fig. 8 illustrates binary trees used to represent compressed sequence entries in a compressed dictionary.
Fig. 9 is a flow diagram of an SSD item generation process that implements block 408 of the Fig. 4 process.
Fig. 10 is a flow diagram of a split-stream dictionary program decompression process.

### DETAILED DESCRIPTION

Split-stream dictionary (SSD) program compression is a new technique for transforming programs into a compact, interpretable form. A compressed program is considered "interpretable" when it can be decompressed at basic-block granularity with reasonable efficiency. The granularity requirement enables interpreters or just-in-time (JIT) translators to decompress basic blocks incrementally during program execution.

SSD program compression combines a split-stream dictionary approach with a scheme for exploiting the high frequency with which large programs re-use small sequences of instructions. Table 1 summarizes single instruction re-use frequency for a set of benchmark programs. All columns reflect instruction-matching algorithm that compares sizes but not specific values of pc-relative branch targets. The last column reports the average re-use frequency for the 10% of instruction sequences (lengths 2-4 instructions) that were most common.

**Table 1**

| Program | Total Instructions/ Unique Instructions | Average Re-use Frequency for an Instruction | Unique Digrams | Average Re-use Frequency for a Digram | Avg. Reuse Freq. Of Most Common Instruction Sequences (top 10%) |
|---|---|---|---|---|---|
| Word97 | 1427592/124288 | 11.5 | 518351 | 2.8 | 16.6 |
| Gcc 2.6.3 | 194501/22946 | 8.4 | 78413 | 2.5 | 12.5 |
| Vortex | 97931/11828 | 8.3 | 34657 | 2.8 | 12.8 |
| Perl | 75270/11664 | 6.5 | 34043 | 2.2 | 9.5 |
| Go | 36398/6133 | 5.9 | 17568 | 2.1 | 10.0 |
| Ijpeg | 31057/7893 | 3.9 | 19207 | 1.6 | 8.5 |
| M88ksim | 21957/5865 | 3.7 | 11403 | 1.9 | 3.4 |
| Xlisp | 13414/1860 | 7.2 | 5549 | 2.4 | 7.4 |
| Compress | 1411/591 | 2.4 | 1032 | 1.4 | 5.2 |

These measurements show that the benchmark programs re-use each of their instructions an average of 2.4 to 11.5 times. Further, all programs whose x86 optimized code is at least 150 kilobytes in length (i.e., Word97, Gcc 2.6.3, Vortex, Perl, and Go) re-use each of their instructions an average of 5.9 to 11.5 times. Table 1 shows that re-use frequencies drop off for sequences of two instructions; however, it also shows that the benchmark programs rabidly re-use their favorite two- to four-instruction idioms.

### SSD Program Compression Architecture

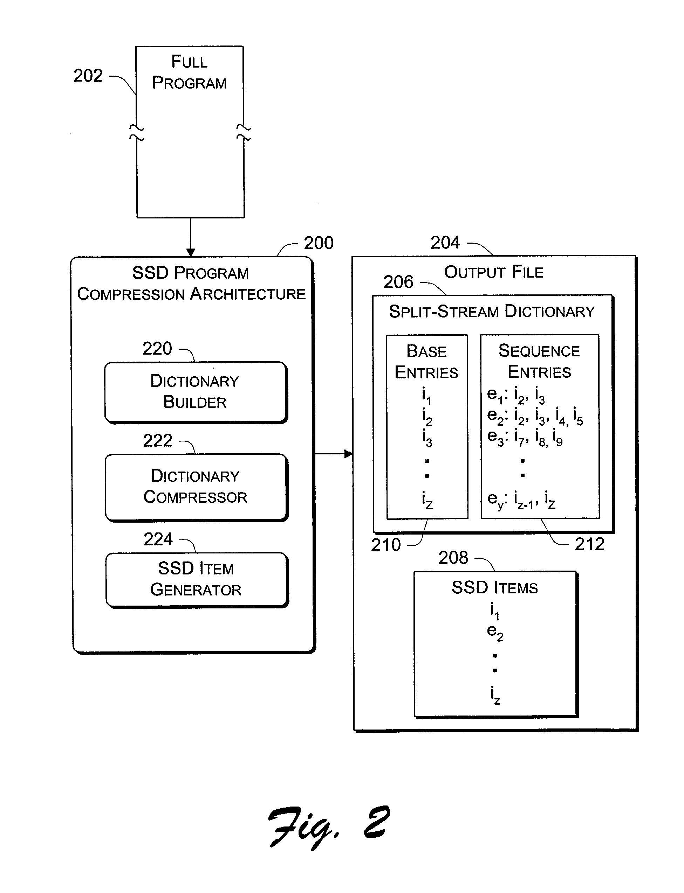

Fig. 2 shows a split-stream dictionary program compression architecture 200 that implements a split-stream compression scheme that exploits the high frequency with which large programs re-use small sequences of instructions. The SSD program compression architecture 200 reads in an uncompressed program 202 and generates an output file 204 that contains two parts: (1) a split-stream compressed dictionary 206 containing instruction sequences derived from the program 202 and (2) a stream of SSD items 208 that reference entries in the dictionary 206.

The dictionary 206 that contains two types of entries: base entries 210 and sequence entries 212. The base entries 210 consist of one entry for each individual instruction *<i*_{*1*}*, i*_{*2*}*, i*_{*3*}, ..., *i*_{*Z*}> that occurs in the program 202. The sequence entries 212 consist of one entry for each multi-instruction sequence that occurs two or more times in the input program 202. In Fig. 2, the first sequence entry *e*_{*1*} identifies a two-instruction sequence *<i*_{*2*}, *i*_{*3*}*>*, the next entry *e*_{*2*} identifies a four-instruction sequence *<i*_{*2*}, *i*_{*3*}*, i*_{*4*}, *i*_{*5*}*>*, and so forth.

The SSD compression architecture 200 includes a dictionary builder 220, a dictionary compressor 222, and an SSD item generator 224. The dictionary builder 220 initially constructs the dictionary 206 by inputting a base entry 210 for each instruction in the program 202 and then adding a sequence entry 212 for each multi-instruction sequence that occurs two or more times in the input program 202. In one implementation, the dictionary builder 220 limits its sequences to a few instructions, such as two- to four-instruction sequences.

The dictionary compressor 222 compresses the dictionary in two parts. First, the dictionary compressor 222 compresses the base entries 210. It then compresses the sequence entries 212.

After the dictionary is constructed for a given program 202 and compressed, the SSD item generator 224 matches the instructions in the program 202 against the dictionary 206 and generates a string of SSD items indicating when a set of one or more instructions matches a predefined base entry 210 or sequence entry 212. For example, suppose the sequence entries 212 contain two-to four-instruction sequences. The SSD item generator 224 initially evaluates whether the first four-instruction input *<i*_{*1*}*,i*_{*2*}*,i*_{*3*}*,i*_{*4*}*>* in program 202 matches any four-instruction sequence entry 212 in the dictionary 206. If it finds a match with sequence entry *e*, it outputs an SSD item 208 that refers to sequence entry *e* and then continues matching with instruction *i*_{*5*}. In the illustrated example, there are no matches.

If no match is found, the SSD item generator 224 tries to match a three-instruction input *<i*_{*1*}*,i*_{*2*}*,i*_{*3*}*>* against all three-instruction sequence entries in the dictionary 206. If there is a match, the generator 224 outputs an SSD item 208 that references the corresponding sequence entry; otherwise, the SSD item generator 224 evaluates a two-instruction sequence *<i*_{*1*},*i*_{*2*}*>*, and so on. Finally, if no sequence entries 212 match the current input, the SSD item generator 224 outputs an SSD item 206 that refers to the base entry *i*_{*1*} matching the first instruction. This is the case for the illustrated example, where the first SSD item 208 is the base entry *i*_{*1*}.

The SSD item generator 224 continues with matching with a four-instruction input beginning with instruction *i*_{*2*}, which is input sequence *<i*_{*2*},*i*_{*3*},*i*_{*4*},*i*_{*5*}*>*. In this case, the input sequence matches sequence entry *e*_{*2*}. Thus, the SSD item generator outputs an SSD item that refers to sequence entry *e*_{*2*} and then continues matching with the next instruction *i*_{*6*}.

The SSD item generator 224 continues evaluating input instructions against the dictionary and generating SSD items 208 until the input is exhausted.

In one implementation, the SSD items 208 refer to the dictionary entries 210 or 212 using 16-bit indices. A dictionary of 2¹⁵ entries is expected to be sufficient for many programs. If a dictionary requires more than 2¹⁶ entries, the dictionary is portioned into a common dictionary that applies to the entire compressed program, and a series of sub-dictionaries that apply only to parts of the compressed program.

In addition to a 16-bit index, an SSD item 208 may also contain a pc-relative offset representing an intra-function branch target. A dictionary entry 210 or 212 can contain at most one branch instruction. In sequence entries 212, the branch instruction is always the last instruction of the sequence; no dictionary entry spans more than one basic block.

The SSD program compression architecture prefers representing intra-function branch targets as pc-relative offsets in the stream of SSD items 208 rather than as absolute instruction addresses inside dictionary entries for two reasons. First, pc-relative offsets are more compact than absolute addresses. Second, this enables the SSD program compression scheme to ignore pc-relative offset values when comparing branch instructions during dictionary construction. Instead of matching the exact value of pc-relative offset fields, the SSD program compression scheme matches only the size of pc-relative offsets. This choice sharply reduces dictionary size, but requires that the stream of SSD items 208 explicitly represent pc-relative offsets. In one set of benchmark programs, this choice yielded compressor output an average of 6.2% smaller than the output of a compressor configured to represent branch targets as absolute values within dictionary entries.

The split-stream dictionary program compression architecture 200 uses a split-stream method to compress a dictionary of instruction sequences derived from the program, rather than the entire program 202. It is noted that if the input program 202 avoids re-using any instructions, the dictionary 206 would be essentially identical to the input program and the output of the SSD program compression architecture would actually be *larger* than the input program. Fortunately, large programs make extensive re-use of single instructions and short instruction sequences. Thus, the output of the SSD program compression architecture is substantially smaller than the input program 202.

Split-stream dictionary program compression is significantly simpler to implement than BRISC in that it embeds an input-specific dictionary into each compressed program. When the input program is large (30 kilobytes or more), SSD program compression also compresses programs more effectively than BRISC.

### Exemplary Computing Environment

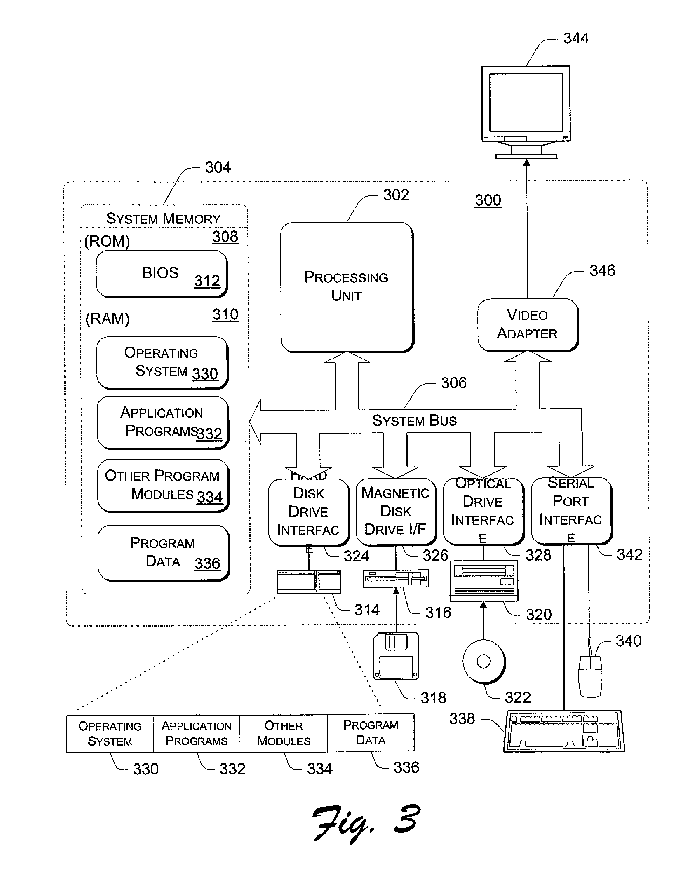

Fig. 3 illustrates an example of an independent computing device 300 that can be used to implement the SSD program compression architecture of Fig. 2. The computing device 300 may be implemented in many different ways, including as a workstation, a server, a desktop computer, a laptop computer, and so forth. The computing device 300 may be a general-purpose computer or specifically configured as a manufacturing computer designed to compress application programs prior to distribution or being loaded into an embedded system.

In the illustrated example, computing device 300 includes one or more processors or processing units 302, a system memory 304, and a bus 306 that couples the various system components including the system memory 304 to processors 302. The bus 306 represents one or more types of bus structures, including a memory bus or memory controller, a peripheral bus, an accelerated graphics port, and a processor or local bus using any of a variety of bus architectures. The system memory 304 includes read only memory (ROM) 308 and random access memory (RAM) 310. A basic input/output system (BIOS) 312, containing the basic routines that help to transfer information between elements within the computing device 300 is stored in ROM 308.

Computing device 300 further includes a hard drive 314 for reading from and writing to one or more hard disks (not shown). Some computing devices can include a magnetic disk drive 316 for reading from and writing to a removable magnetic disk 318, and an optical disk drive 320 for reading from or writing to a removable optical disk 322 such as a CD ROM or other optical media. The hard drive 314, magnetic disk drive 316, and optical disk drive 320 are connected to the bus 306 by a hard disk drive interface 324, a magnetic disk drive interface 326, and a optical drive interface 328, respectively. Alternatively, the hard drive 314, magnetic disk drive 316, and optical disk drive 320 can be connected to the bus 306 by a SCSI interface (not shown).

The drives and their associated computer-readable media provide nonvolatile storage of computer-readable instructions, data structures, program modules and other data for computing device 300. Although the exemplary environment described herein employs a hard disk 314, a removable magnetic disk 318, and a removable optical disk 322, it should be appreciated by those skilled in the art that other types of computer-readable media which can store data that is accessible by a computer, such as magnetic cassettes, flash memory cards, digital video disks, random access memories (RAMs), read only memories (ROMs), and the like, may also be used in the exemplary operating environment.

A number of program modules may be stored on ROM 308, RAM 310, the hard disk 314, magnetic disk 318, or optical disk 322, including an operating system 330, one or more application programs 332, other program modules 334, and program data 336. As one example, the SSD program compression architecture 200 may be implemented as one or more programs 332 or program modules 334 that are stored in memory and executed by processing unit 302.

In some computing devices 300, a user might enter commands and information into the computing device 300 through input devices such as a keyboard 338 and a pointing device 340. Other input devices (not shown) may include a microphone, joystick, game pad, satellite dish, scanner, or the like. In some instances, however, a computing device might not have these types of input devices. These and other input devices are connected to the processing unit 302 through an interface 342 that is coupled to the bus 306. In some computing devices 300, a monitor 344 or other type of display device might also be connected to the bus 306 via an interface, such as a video adapter 346. Some devices, however, do not have these types of display devices. In addition to the monitor 344, computing devices 300 might include other peripheral output devices (not shown) such as speakers and printers.

Generally, the data processors of computing device 300 are programmed by means of instructions stored at different times in the various computer-readable storage media of the computer. Programs and operating systems are typically distributed, for example, on floppy disks or CD-ROMs. From there, they are installed or loaded into the secondary memory of a computing device 300. At execution, they are loaded at least partially into the computing device's primary electronic memory. The computing devices described herein include these and other various types of computer-readable storage media when such media contain instructions or programs for implementing the steps described below in conjunction with a microprocessor or other data processor. The service system also includes the computing device itself when programmed according to the methods and techniques described below.

For purposes of illustration, programs and other executable program components such as the operating system are illustrated herein as discrete blocks, although it is recognized that such programs and components reside at various times in different storage components of the computing device 300, and are executed by the data processor(s) of the computer.

### SSD Program Compression Operation

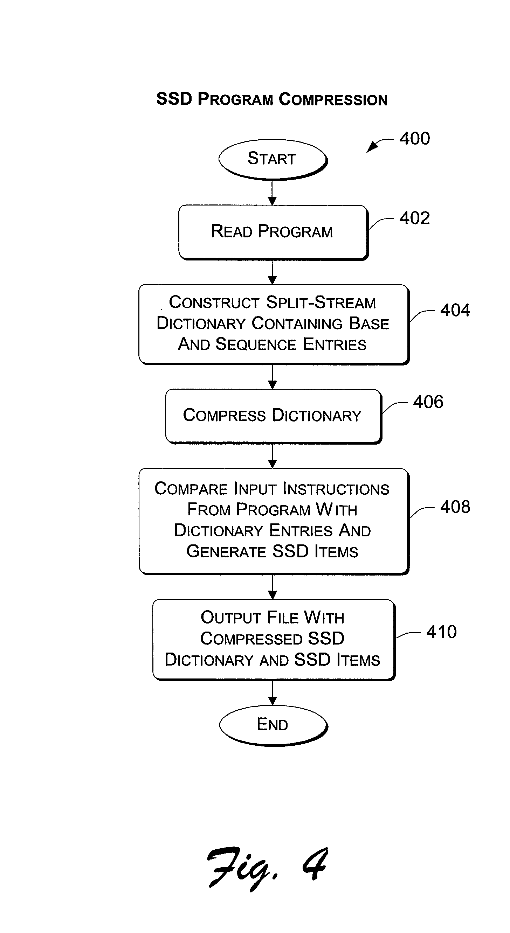

Fig. 4 shows a split-stream dictionary program compression process 400 that utilizes a split-stream compression scheme to exploit the re-use small sequences of instructions in large programs. The compression process 400 is implemented by the architecture 200 of Fig. 2 and may be embodied in software stored and executed on a computer, such as computing device 300 in Fig. 3. Accordingly, the process 400 may be implemented as computer-executable instructions that, when executed on a processing system such as processor unit 302, performs the operations and tasks illustrated as blocks in Fig. 4.

At block 402, the SSD program compression architecture 200 reads the input program 202. At block 404, the dictionary builder 220 constructs a split-stream dictionary 206 with base entries 210 for each individual instruction that occurs in the program 202 and sequence entries 212 for each multi-instructions sequence (e.g., two- to four-instruction sequence) that occurs two or more times in the input program 202.

At block 406, the dictionary compressor 222 compresses the split-stream dictionary 206 by separately compressing the base entries 210 and the sequence entries 212.

At block 408, once the dictionary is constructed for a given program and compressed, the SSD item generator 224 compares successively smaller sequences of instructions from the input program to the sequence and base entries in the dictionary to identify matches. When a match is found, the SSD item generator 224 produces SSD items that reference the matching sequence entry 212 or base entry 210 in the dictionary 206. At block 410, the result is an output file containing the compressed split-stream dictionary 206 and a stream of SSD items 208.

The three primary operations―dictionary construction 404, dictionary compression 406, and SSD item generation 408―are discussed separately below in more detail.

### Dictionary Construction (Block 404)

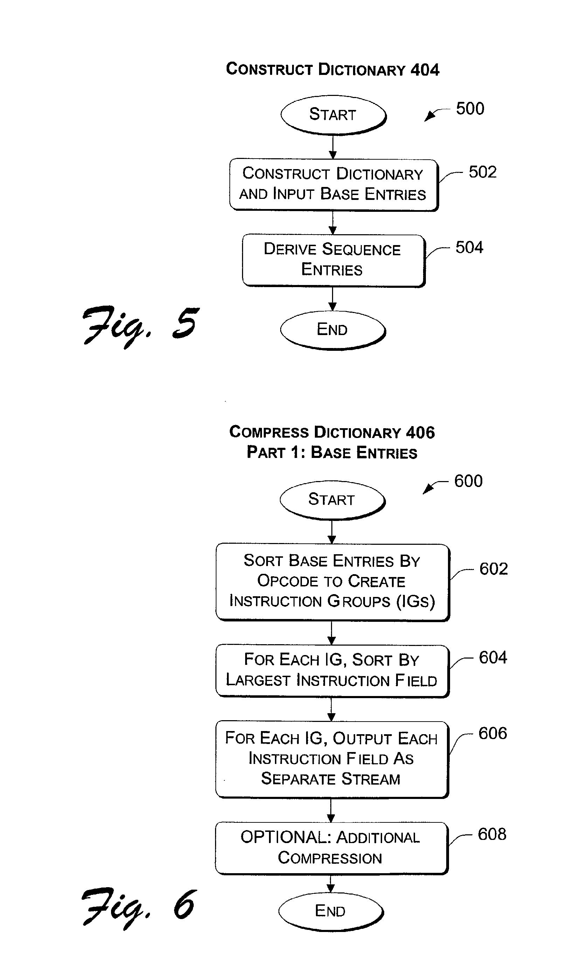

Fig. 5 shows an exemplary dictionary construction process 500 that may be implemented as block 404 in Fig. 4. The dictionary construction process 500 may be performed by the dictionary builder 220 in SSD program compression architecture 200. At block 502, the dictionary builder 220 generates a dictionary *D* and inputs all base entries for each individual instruction in a program *P*. The dictionary builder 220 then derives sequence entries *E* for all multi-instruction sequences that occur multiple times in program *P* (block 504).

The following pseudo code demonstrates one implementation of the dictionary construction process 500 that constructs a dictionary *D* and inputs sequence entries *E* for two- to four-instruction sequences that occur at least twice in the program.
1. Make each unique instruction in *P* a base entry of *D*
2. *Cur*=*P*; *E*=the empty sequence
3. while (*Cur* not empty)
   a. find the longest sub-sequence of instructions *s*, with length *L,* such that:
      i. *Cur* contains at least *L* instructions and *L*<=4
      ii. *s* matches the first *L* instructions in *Cur*
      iii. *s* occurs at least twice in *P*
      iv. *s* is contained within a single basic block of P
   b. if L>=2 then
      i. *Entry*=GetEntry(*D*,*s*)
   c. else
      i. *Entry*=GetEntry(D,Head(*Cur*))
   d. *target*=GetBranchTarget(*Cur*,*L*)
   e. Append(*E*,NewRef(*Entry,Target*))
   f. *Cur*=Ntail(*Cur*,*L*)

Table 2 summarizes the inputs, outputs, variables, and operators of the above pseudo code.

**Table 2**

| | |
|---|---|
| Input | *P*: a sequence of instructions |
| Outputs | *D*: an SSD dictionary |
| | *E*: a sequence of references to entries in *D* |
| Variables | *Cur*: a sequence of instructions |
| | *Entry*: a dictionary entry |
| | *Target*: pointer to branch target instruction |
| Operators | Ntail(*S*,*n*): If sequence *S* has length *L*_{*S*}, returns the suffix of *S* with length *L*_{*s*}*-n* |
| | Head(*S*): returns first element of sequence *S* |
| | Append(*S,e*): appends e to end of sequence *S* |
| | GetEntry(*D*,*s*): returns dictionary entry matching instruction sequence *s*; creates entry if necessary. |
| | NewRef(*entry*,*tgt*): returns structure containing reference to dictionary entry and branch target *tgt* |
| | GetBranchTarget(*S*,*L*): return branch target, if any, of *L*^{*th*} instruction in sequence *S* |

In one implementation, two hash tables and an additional pass over the input may be used to implement the above process. The first hash table (*H*_{*I*}) contains individual instructions; the second (*H*_{*D*}) contains digrams of adjacent instructions. Before execution, the dictionary builder 220 reads the entire program, constructing these two hash tables. To implement operation 1 of the above process, each element of table *H*_{*I*} is made a base entry of dictionary *D.* The remainder of the above process (i.e., operations 2 and 3) constitutes a second pass through the input program *P.* Conceptually, the algorithm matches prefixes of lengths two-to-four of the remaining instructions *(Cur)* against the entire program (*P*), attempting to find a sequence of instructions (*s*) that matches the prefix and occurs at least twice in *P.*

To accomplish this, the prefix of length 2 is matched against the digram hash table (*H*_{*D*}). For each digram *d* occurring at least twice in *P*, *H*_{*D*} contains a list of all the program addresses at which diagram *d* occurs. To implement operation 3.a, the dictionary builder 220 traverses the list in digram hash table (*H*_{*D*}), matching the instructions at the front of *Cur* against up to four of the instructions found at each location of the matched digram *d* within the program *P.* The implementation compares the longest match, if any have length >= 2, with the sequence entries already in *D.* If *D* does not already contain a sequence entry for matching instruction sequence *s*, operation 3.b.i creates a new sequence entry and adds it to *D.*

When a match is found, operation 3.f sets *Cur* to begin at the next instruction after the matched prefix. This step yields a greedy algorithm, because by skipping over instructions once it has found a match, the process ignores the possibility of finding a longer match beginning at one of the other instructions in the matched prefix. In any case, operation 3.e appends to output sequence *E* the dictionary entry (*entry*) obtained during operations 3.a and 3.b.

In the case of branch instructions, the task of comparing instructions is more complex than simple equality. Two branch instructions *a* and *b* will match when their pc-relative branch target fields are equal in size and all other fields are exactly equal. A dictionary entry *e*_{*b*} containing a branch instruction specifies only the size *sz*_{*b*} in bytes of *e*_{*b*}'s target. Each SSD item referring to *e*_{*b*} supplies a pc-relative branch target of size *sz*_{*b*}*.*

### Dictionary Compression (Block 406)

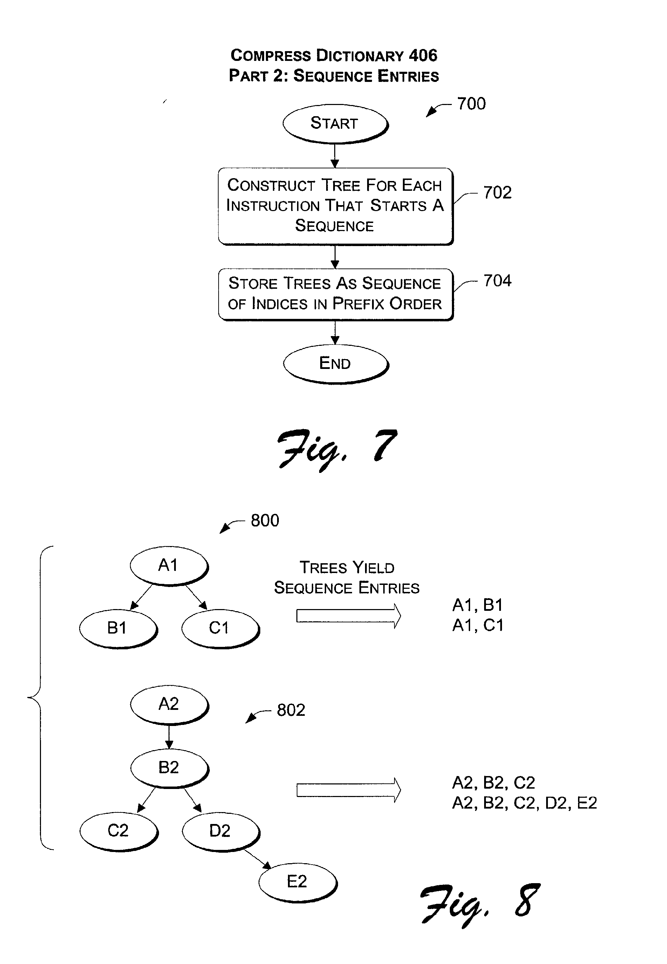

Figs. 6 and 7 illustrate a two-part compression process that may be implemented as block 406 of Fig. 4. More particularly, dictionary compression can be divided into two parts: (1) compression of the base entries and (2). compression of the sequence entries. The dictionary compression process may be performed by the dictionary compressor 222 in SSD program compression architecture 200.

Fig. 6 illustrates a compression process 600 tailored for compressing the base entries in the dictionary *D.* At block 602, the dictionary compressor 222 sorts the base entries by opcode, thereby creating an instruction group for each opcode. At block 604, within each instruction group, the dictionary compressor 222 sorts the base entries by the largest instruction field for that group's opcode. For example, the compressor 222 sorts "call" instructions by target address, but sorts arithmetic-immediate instructions (e.g. add r1,r2,45) by their immediate field. The details of sorting depend on the particular instruction set of the input program. In implementation used in the experiments described below, the OmniVM virtual machine instruction set was used.

At block 606, within an instruction group, the compressor 222 outputs each instruction field as a separate stream. For example, for an add immediate instruction group (with pattern add reg1, reg2, imm), the instruction group is sorted by the "imm" field and then all "imm" fields are output, followed by all "reg1" fields and then, all "reg2" fields.

At block 608, the compressor 222 may optionally attempt to further compress the sorted fields of the base entries. As one example, the sorted field (in our example, the imm field) may be sorted using delta coding. Delta coding expresses each value as an increment from the previous value (with suitable escape codes for occasional large deltas). All other fields are output literally. A second approach is to concatenate all of the sorted instruction groups and then apply a simple form of LZ compression to the result. During experimentation, this latter approach proved simpler and yielded better compression. It is used for all experiments described below.

Fig. 7 illustrates a compression process 700 tailored for compressing the sequence entries in the dictionary *D.* At block 702, the dictionary compressor 222 constructs a forest of trees, one tree for each instruction *i* that can start a sequence. A given tree *t*_{*i*} represents all of the sequences in dictionary *D* that start with instruction *i.* If two such sequence entries in dictionary *D* share a common prefix *p* of length *L,* their representation in tree *t*_{*i*} will share the first *L* nodes.

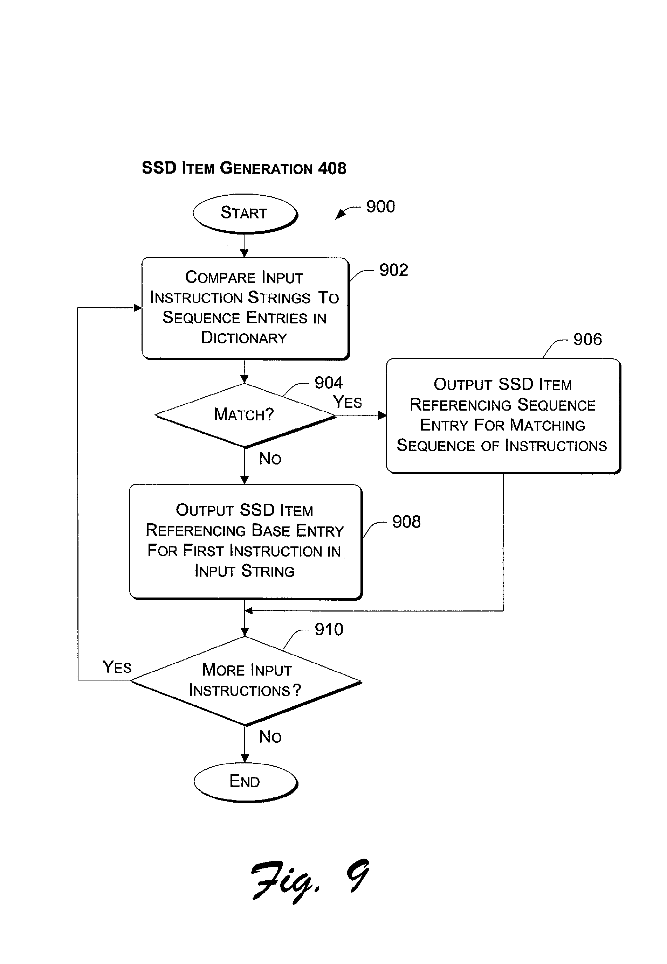

Fig. 8 depicts two trees 800 and 802 that are used to represent four sequence entries.

At block 704, the dictionary compressor 222 stores each tree as a sequence of 16-bit indices that refer to base entries of dictionary *D*. The indices are stored in prefix order. If dictionary *D's* base entries number 2¹⁵ or fewer, the dictionary compressor 222 represents the tree structure using the high-order bit of each index. Specifically, the high-bit is set whenever the tree traversal travels back toward the root node from a lower level in the tree. If dictionary *D* has more than 2¹⁵ base entries, the dictionary compressor 222 uses a special index value to mark upward tree traversal.

### SSD Item Generation (Block 408)

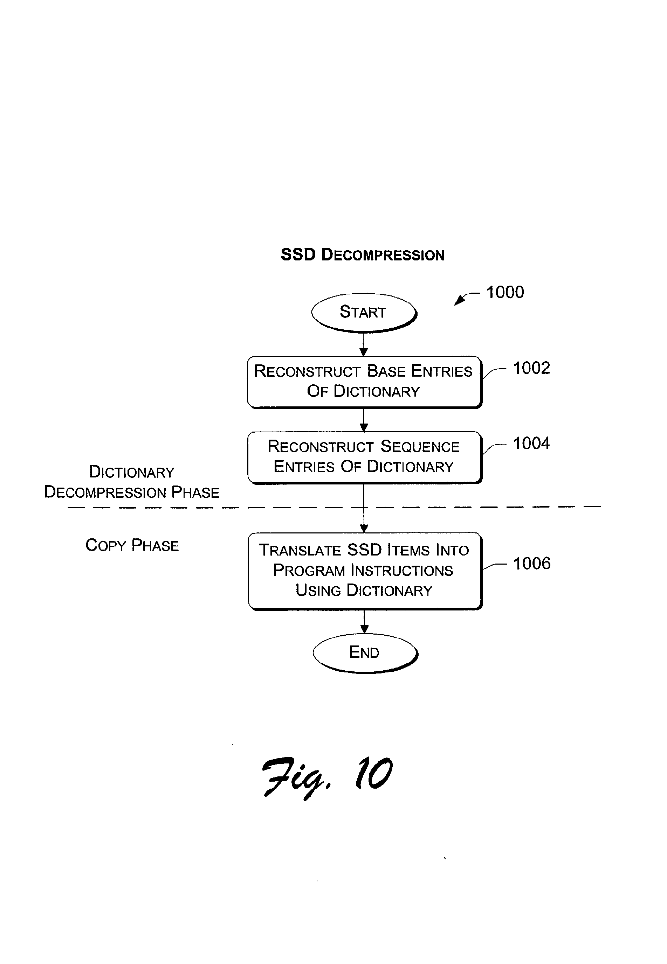

Fig. 9 shows an exemplary SSD item generation process 900 that may be implemented as block 408 in Fig. 4 to generate SSD items 208 that reference entries in the compressed dictionary. The SSD item generation process 900 may be performed by the SSD item generator 224 in SSD program compression architecture 200.

At block 902, the SSD item generator 224 compares instruction strings from the input program to the sequence entries 212 that refer to multi-instruction sequences that occur at least twice in the program. The SSD item generator 224 begins with larger instruction strings, and moves progressively to smaller strings, attempting to find a match. If it finds a match with sequence entry *e* (i.e., the "yes" branch from block 904), it outputs an SSD item 208 that refers to the sequence entry *e* in the dictionary (block 906) and continues matching with the next instruction (assuming more instructions exist). Each SSD item contains a 16-bit index corresponding to a dictionary entry referred to by the sequence entry.

If no sequence entries match the current input (i.e., the "no" branch from block 904), SSD will output an SSD item 208 that refers to a base entry 210 that matches the first instruction in the instruction string (block 908). The process then continues with an instruction string beginning with the next instruction, if one exists. The process 900 continues matching input instructions against the dictionary and generating SSD items until the input is exhausted (block 910).

The following pseudo code demonstrates one implementation of the dictionary construction process 900 that converts the dictionary entry sequence *E* to a sequence of SSD items 208.
1. *Cur=E*
2. **while** *(Cur* not empty)
   *a. Ref*=Head(*Cur*)
   b. If (IsBranch(*Ref*.*t*)) then
      i. *Tgt*=ConvertTarget(*I*,*Ref*.*t*)
   c. else
      i. *Tgt*=**null**
   d. Append(*I*,NewItem(GetIndex(*Ref*.*R*),*Tgt*))
3. Fix branch targets for forward branches

Table 3 summarizes the inputs, outputs, variables, and operators of the above pseudo code.

**Table 3**

| | |
|---|---|
| Input | *E*: a sequence of pairs *<R,t>* where *R* refers to a dictionary entry and t is a branch target |
| Output | *I*: a sequence of SSD items, one for each element of *E* |
| Variables | *Ref*: a pair *<R,t>* as described above *Tgt:* a branch target |
| Operators | GetIndex(*R*): returns 16-bit index corresponding to dictionary entry referred to by *R* |
| | Newltem(*indx*,*tgt*): given an index *indx* and a branch target, *tgt*, creates an SSD item |
| | IsBranch(*tgt*): returns true if *tgt* is a valid branch target |
| | ConvertTarget(*I*,*tgt*): given a branch target *tgt*, converts it to a branch target expressed relative to the end of SSD item sequence *I* |

In one implementation, some extra bookkeeping is performed to support operation 3. For each forward branch processed in operation 2.b.i, a "relocation item" is created and stored. Each relocation item points to an SSD item *br*_{*i*} in *I.* The relocation item also contains the intended target of the forward branch *br*_{*i*} in terms of the input sequence *E*.

Then, in operation 3, the SSD item generator traverses its list of relocation items, overwriting the pc-relative branch target values once their target addresses in *I* are known. To compute these target addresses, the SSD item generator maintains a forwarding table that maps items in sequence *E* to items in sequence *I*. The ConvertTarget operator immediately looks up backward branches in this forwarding table, but for forward branches, it creates a relocation item.

### JIT Translation (SSD Decompression)

In this section, SSD program decompression is described. In addition, this section discusses one implementation of how to incorporate SSD decompression into virtual machine (VM) systems that incrementally translate compressed programs into native instructions.

Fig. 10 shows an SSD decompression process 1000 to decompress a program that has been previously compressed using the SSD program compression process 400 of Fig. 4. The SSD decompression process 1000 is divided into two phases: (1) a dictionary decompression phase and (2) a copy phase. For discussion purposes, the SSD decompression process is described as being implemented by a VM system.

At block 1002, during dictionary decompression, the VM first reconstructs the base entries 210 of the compressed dictionary, essentially reversing the compression operations described above with respect to process 600 of Fig. 6. If the original input program contained virtual machine instructions, the VM performs additional work during the base entry decompression operation. As the VM generates base entries 210, it converts them from virtual machine instructions to native instructions. This type of conversion is appropriate only for virtual machine instruction sets (e.g., OmniVM) that accommodate optimization, since the conversion is done by translation of individual instructions, rather than optimizing compilation. Of course, the VM can take a hybrid approach by further optimizing each function once it has generated the native code for that function. For example, the OmniVM can optionally perform machine-specific basic block instruction scheduling on its generated native code.

The organization of the base entries facilitates rapid conversion from virtual to native instructions. Since SSD arranges these entries into instruction groups sorted by opcode and largest field value, much of the work needed to translate a particular instruction can be shared among the instructions in a group.

At block 1004, the VM reconstructs the sequence entries 212 of the dictionary by traversing the tree that represents the entries.

The dictionary decompression phase produces an "instruction table" of native instructions organized to support the copy phase of SSD decompression. The instruction table maps the 16-bit indices found during compression to sequences of native instructions. Each entry in the instruction table begins with a 32-bit tag that provides the length of the ensuing instruction sequence. If the instruction sequence ends with a branch instruction *b*, the tag provides a negative offset from the end of *b*; this offset indicates where within *b* to copy the pc-relative branch target *t* that will be supplied by the SSD item. Instruction *b*'s opcode determines *t*'s size.

At block 1006, during the copy phase of SSD decompression, the VM translates the SSD items back into instruction sequences of the program using the decompressed dictionary. In particular, the VM expands each basic block by copying dictionary entries into a native code buffer. The copy phase can take place incrementally. For example, the Omniware virtual machine implementation uses SSD decompression to perform JIT translation one function at a time.

The following pseudo code demonstrates one implementation of the copy phase of SSD decompression.
1. *ptr=start;jptr=jbuf*
2. **while** (*start<end*)
   a. *item=ibuf*[*ptr*]
   b. *copylen=*GetLength*(itab,item); iptr*=GetPointer(*itab,item*)
   c. copy *copylen* bytes from *iptr* to *jptr*
   d. *jptr=jptr+copylen*
   e. if (IsBranch(*itab*, *item)* then
      i. get branch target from *item*
      ii. if forward branch or function call then create relocation item for branch target field else convert branch target to pc-relative offset and overwrite target field in copied instructions
   f. *ptr=ptr*+size of *item* in *ibuf*
3. Apply relocation items to fix up forward branches and call targets

Table 4 summarizes the inputs, outputs, variables, and operators of the above pseudo code.

**Table 4**

| | |
|---|---|
| Inputs | *Ibuf*: buffer containing SSD items |
| | *Start*: address of first item to translate |
| | *End*: address just past last item to translate |
| | *Itab*: instruction table produced by dictionary decompression |
| Output | *Jbuf*: JIT-translation buffer containing native instructions |
| Variables | *Ptr*: pointer to current SSD item |
| | *Copylen*: number of instruction bytes to copy |
| | *Iptr*: pointer into instruction table |
| | *Jptr*: pointer into JIT translation buffer |
| Operators | GetLength(*itab,item*): use *itab* to find length in bytes of instructions to be copied for *item* |
| | GetPointer(*itab*,*item*): return pointer to instructions to be copied |
| | IsBranch |
| | (*itab,item*): returns true if *item* refers to instruction sequence ending with branch |

As noted above, a VM may use SSD decompression to perform JIT translation one function at a time. In the above pseudo code, this would correspond to setting *"start"* to point to the beginning of the function and *"end"* to point just past the function. There are three paths through operation 2, depending on whether the translated SSD item contains a forward branch or call, a backward branch, or only non-branching instructions. The latter path occurs most frequently and requires only 7+*n* x86 machine instructions to complete, where *n* is the number of bytes of native instructions copied.

By supporting the two-phase JIT-translation, one advantage of SSD program compression is that it supports graceful degradation of program execution times as JIT-translation buffers shrink. In the phase one, the virtual machine loads and decompresses the dictionary, which maps 16-bit indices to sequences of one to four instructions. During phase two, the JIT-translator expands a basic block by copying dictionary entries into a native code buffer. Because phase two translation consists mostly of copying memory blocks, it is fast. Once the virtual machine pays the fixed cost of dictionary decompression, it can translate and re-translate parts of the program at this phase two translation speed. This feature enables a virtual machine to achieve reasonable program execution times even when using a native code buffer significantly smaller than the program being executed.

### Experimentation Results

The SSD decompression process is designed to support rapid, incremental decompression and JIT translation of highly compressed programs. In this section, a quantitative evaluation of how well SSD achieves these goals is presented is provided.

Three sets of experiments were conducted. In the first experiment, SSD-compressed and optimized OmniVM was compared to optimized-x86 representations of a set of benchmark programs, including the spec95 benchmarks and the "Word97" word processing program from Microsoft Corporation (hereinafter, Word97). In the second experiment, the impact of SSD decompression and JIT translation on the execution time of our benchmark programs was measured. In the third experiment, the size of the buffer used to hold JIT-translated native instructions was limited and the impact of this limitation on Word97 execution times was measured.

All three experiments were performed on a 450MHz Pentium II processor with 128 megabytes of memory, running Microsoft Windows NT 4.0 service pack 5. We used Microsoft Visual C++ 5.0 at its highest level of optimization to compile our benchmark programs. To measure execution time for the spec95 benchmarks we used the standard benchmark input sets; for Word97, we used a performance test suite that includes the Word97 auto-format, auto-summarize and grammar check commands.

Table 5 shows SSD compressed the OmniVM benchmark programs to less than half the size, on average, of their optimized x86 versions. Table 5 also compares SSD compression to BRISC compression, illustrating that SSD compresses programs more effectively than BRISC.

**Table 5**

| Program | Optimized x86 Size (bytes) | Ratio of SSD Compressed Size to Optimized x86 Size | Ratio of BRISC Compressed Size to Optimized x86 Size | SSD Execution Time Overhead | SSD JIT Translation and Decompression Execution Time Overhead | SSD Overhead Due to Reduced Code Quality |
|---|---|---|---|---|---|---|
| Word97 | 5175500 | 0.45 | 0.69 | 3.2% | 0.7% | 2.5% |
| Gcc | 747436 | 0.49 | 0.57 | 9.1% | 0.4% | 8.7% |
| 2.6.3 | | | | | | |
| Vortex | 400040 | 0.37 | 0.55 | 7.7% | 0.4% | 7.3% |
| Perl | 238950 | 0.57 | 0.85 | 8.6% | 0.3% | 8.3% |
| Go | 180838 | 0.42 | 0.60 | 5.5% | 0.2% | 5.3% |
| Ijpeg | 136070 | 0.50 | 0.60 | 8.1% | 0.5% | 7.6% |
| M88ksim | 119782 | 0.41 | 0.49 | 7.4% | 0.3% | 7.1% |
| Xlisp | 75942 | 0.43 | 0.59 | 5.1% | 0.2% | 4.9% |
| Compress | 7234 | 0.58 | 0.57 | 4.3% | 0.2% | 4.1% |
| Average | 786866 | 0.47 | 0.61 | 6.6% | 0.4% | 6.2% |

In addition, Table 5 lists execution times for the benchmark programs. The measurements demonstrate that SSD decompression does not significantly impact program execution time. Execution time overhead averaged approximately 6.6%. Table 5 breaks this overhead into components, measured using execution time profiling, showing that most of the execution time overhead was due to reduced quality of the JIT-translated native code rather than to decompression overhead. Decompression overhead contributed less than 0.5%, on average, to the total execution time of the benchmarks.

Table 6 graphs performance of Word97 as a function of JIT-translation buffer size, using both BRISC and SSD compression. The buffer size is varied from 0.2 to 0.5 times the size of Word97's optimized x86 code. In these measurements, the buffer size is computed as the sum of the JIT translation buffer size plus the size of either the SSD dictionary or, for BRISC, the BRISC external dictionary. Also, the infrastructure required to discard and to re-generate JIT-translated code (including a level of indirection for function calls) increases to 14.1% the minimum execution time achievable (versus the JIT-translate-once overhead of 3.2%).

**Table 6**

| Buffer Size (including dictionary size) / Optimized x86 Code Size | Megabytes JIT-Translated (including re-translation) | Buffer Hit Rate |
|---|---|---|
| 0.2 | 208.0 | 91.31 |
| 0.25 | 119.1 | 94.35 |
| 0.275 | 53.2 | 99.83 |
| 0.3 | 13.5 | 99.87 |
| 0.325 | 9.3 | 99.89 |
| 0.35 | 7.4 | 99.89 |
| 0.4 | 6.5 | 99.93 |
| 0.45 | 6.1 | 99.95 |
| 0.5 | 5.3 | 99.96 |

### Conclusion

SSD program compression combines split-stream dictionary compression with re-use of small sequences of instructions. SSD program compression is a .. simple but powerful tool that increases the ability to trade program size for program execution time in designing computer systems. Embedded systems can use the graceful degradation of program performance to compactly store system programs in ROM but execute them at near-native performance in a small amount of RAM. Desktop and server systems can use SSD program compression to reduce application startup latency.

SSD program compression offers four advantages over BRISC and other competing techniques. First, SSD program compression is simple, requiring only a few pages of code for an effective implementation. Second, SSD program compression compresses programs more effectively than any other interpretable program compression scheme known to the inventor. For example, SSD program compression compressed a set of programs including the spec95 benchmarks and Microsoft Word97 to less than half the size, on average, of their optimized x86 representation. Third, SSD program compression exceeds BRISC's decompression and JIT translation rates by over 50%. Finally, the two-phased approach to JIT translation enables a virtual machine to provide graceful degradation of program execution time in the face of increasing RAM constraints.

Although the description above uses language that is specific to structural features and/or methodological acts, it is to be understood that the invention defined in the appended claims is not limited to the specific features or acts described. Rather, the specific features and acts are disclosed as exemplary forms of implementing the invention.

## Claims

1. A method, comprising:
forming a dictionary containing base entries representing individual instructions in a program and sequence entries representing corresponding sequences of multiple instructions in the program; and
generating items that represent the program in terms of the base entries and the sequence entries.

2. A method as recited in claim 1, wherein the forming comprises creating a split-stream dictionary.

3. A method as recited in claim 1, wherein the sequence entries represent short sequences consisting of two to four instructions.

4. A method as recited in claim 1, wherein the sequence entries represent sequences of multiple instructions that are used multiple times in the program.

5. A method as recited in claim 1, wherein the generating comprises:
comparing an input string of instructions to the sequence entries in the dictionary; and
if the input string matches a particular sequence entry, generating an item that references the particular sequence entry.

6. A method as recited in claim 1, wherein the generating comprises:
comparing progressively smaller strings of multiple instructions, where each string begins with a first instruction, to the sequence entries in the dictionary;
if any string of multiple instructions matches a particular sequence entry, generating a first item that references the particular sequence entry; and
if no string of multiple instructions matches the sequence entries, generating a second item that references a base entry associated with the first instruction.

7. A method as recited in claim 1, further comprising compressing the dictionary.

8. A method as recited in claim 1, further comprising compressing the base entries of the dictionary.

9. A method as recited in claim 8, wherein the compressing comprises:
sorting the base entries by opcodes to create instruction groups so that there is one instruction group for each opcode; and
for each instruction group, sorting the base entries according to size of individual instruction fields and outputting each instruction field as a separate stream.

10. A method as recited in claim 1, further comprising compressing the sequence entries of the dictionary.

11. A method as recited in claim 10, wherein the compressing comprises constructing tree structures for individual sequences of multiple instructions.

12. A computer readable medium storing the dictionary and the items produced as a result of the method as recited in claim 1.

13. A computer readable medium having computer-executable instructions that, when executed on one or more processors, performs the method as recited in claim 1.

14. A method, comprising:
analyzing a program containing multiple instructions;
creating base entries in a dictionary for individual instructions; and
creating sequence entries in the dictionary for corresponding sequences of multiple instructions that are used multiple times in the program.

15. A method as recited in claim 14, wherein the sequence entries represent short sequences consisting of two to four instructions.

16. A method as recited in claim 14, further comprising compressing the base entries of the dictionary.

17. A method as recited in claim 16, wherein the compressing comprises:
sorting the base entries by opcodes to create instruction groups so that there is one instruction group for each opcode; and
for each instruction group, sorting the base entries according to size of individual instruction fields and outputting each instruction field as a separate stream.

18. A method as recited in claim 14, further comprising compressing the sequence entries of the dictionary.

19. A method as recited in claim 18, wherein the compressing comprises constructing tree structures for individual sequences of multiple instructions.

20. A method as recited in claim 14, further comprising generating items that represent the program in terms of the base entries and the sequence entries.

21. A method as recited in claim 20, wherein the generating comprises:
comparing progressively smaller strings of multiple instructions, where each string begins with a first instruction, to the sequence entries in the dictionary;
if any string of multiple instructions matches a particular sequence entry, generating a first item that references the particular sequence entry; and
if no string of multiple instructions matches the sequence entries, generating a second item that references a base entry associated with the first instruction.

22. A computer readable medium storing the dictionary produced as a result of the method as recited in claim 14.

23. A computer readable medium having computer-executable instructions that, when executed on one or more processors, performs the method as recited in claim 14.

24. A method, comprising:
creating base entries in a dictionary for individual instructions in a program;
creating sequence entries in the dictionary for corresponding sequences of multiple instructions that are used multiple times in the program;
compressing the base entries and the sequence entries to produce a compressed dictionary; and
generating items that represent the program in terms of the base entries and the sequence entries.

25. A method as recited in claim 24, wherein the sequence entries represent short sequences consisting of two to four instructions.

26. A method as recited in claim 24, wherein the compressing comprises:
sorting the base entries by opcodes to create instruction groups so that there is one instruction group for each opcode; and
for each instruction group, sorting the base entries according to size of individual instruction fields and outputting each instruction field as a separate stream.

27. A method as recited in claim 24, wherein the compressing comprises constructing tree structures for individual sequences of multiple instructions.

28. A method as recited in claim 24, wherein the generating comprises:
comparing progressively smaller strings of multiple instructions, where each string begins with a first instruction, to the sequence entries in the dictionary;
if any string of multiple instructions matches a particular sequence entry, generating a first item that references the particular sequence entry; and
if no string of multiple instructions matches the sequence entries, generating a second item that references a base entry associated with the first instruction.

29. A method as recited in claim 24, further comprising decompressing the compressed dictionary.

30. A method as recited in claim 29, further comprising translating the items back to the instructions by using the base entries and the sequence entries of the dictionary.

31. A computer readable medium having computer-executable instructions that, when executed on one or more processors, performs the method as recited in claim 24.

32. A method for decoding a file derived from a program, the file having a dictionary with base entries representing individual instructions in the program and sequence entries representing corresponding sequences of multiple instructions in the program and multiple items that represent the program in terms of the base entries and the sequence entries, the method comprising:
recovering the base entries and the sequence entries of the dictionary; and
translating the items to instructions in the program by using the base entries and the sequence entries in the dictionary.

33. A method as recited in claim 32, wherein the dictionary is compressed and the recovering comprises decompressing the compressed dictionary.

34. A method as recited in claim 32, wherein the translating comprises copying the base entries and the sequence entries into a code buffer.

35. A computer readable medium having computer-executable instructions that, when executed on one or more processors, performs the method as recited in claim 32.

36. A computer readable medium having computer-executable instructions that, when executed on one or more processors, directs a computing device to:
read a program containing multiple instructions;
create base entries in a dictionary for individual instructions in the program;
create sequence entries in the dictionary for corresponding sequences of multiple instructions that are used multiple times in the program; and
generate items that represent the program in terms of the base entries and the sequence entries

37. A computer readable medium as recited in claim 36, wherein the sequence entries represent short sequences consisting of two to four instructions.

38. A computer readable medium as recited in claim 36, further comprising instructions to compress the dictionary.

39. A computer readable medium as recited in claim 36, further comprising instructions to:
sort the base entries by opcodes to create instruction groups so that there is one instruction group for each opcode; and
for each instruction group, sort the base entries according to size of individual instruction fields and outputting each instruction field as a separate stream.

40. A computer readable medium as recited in claim 36, further comprising instructions to compress the sequence entries by constructing tree structures for individual sequences of multiple instructions.

41. A computer readable medium as recited in claim 36, further comprising instructions to:
compare progressively smaller strings of multiple instructions, where each string begins with a first instruction, to the sequence entries in the dictionary;
if any string of multiple instructions matches a particular sequence entry, generate a first item that references the particular sequence entry; and
if no string of multiple instructions matches the sequence entries, generate a second item that references a base entry associated with the first instruction.

42. A program compression architecture comprising:
a dictionary builder to construct a dictionary containing base entries representing individual instructions in a program and sequence entries representing corresponding sequences of multiple instructions that are used multiple times in the program; and
an item generator to generate items that represent the program in terms of the base entries and the sequence entries.

43. A program compression architecture as recited in claim 42 wherein the sequence entries represent short sequences consisting of two to four instructions.

44. A program compression architecture as recited in claim 42 wherein the item generator is configured to compare an input string of instructions to the sequence entries in the dictionary and if the input string matches a particular sequence entry, generate an item that references the particular sequence entry.

45. A program compression architecture as recited in claim 42 wherein the item generator is configured to compare progressively smaller strings of multiple instructions, where each string begins with a first instruction, to the sequence entries in the dictionary such that (1) if any string of multiple instructions matches a particular sequence entry, the item generator produces a first item that references the particular sequence entry and (2) if no string of multiple instructions matches the sequence entries, the item generator produces a second item that references a base entry associated with the first instruction.

46. A program compression architecture as recited in claim 42 further comprising a dictionary compressor to compress the dictionary.

47. A program compression architecture as recited in claim 46 wherein the dictionary compressor is configured to compress the base entries independently of the sequence entries.

48. A program compression architecture as recited in claim 46 wherein the dictionary compressor is configured to sort the base entries by opcodes to create instruction groups so that there is one instruction group for each opcode, the dictionary compressor being further configured to sort the base entries within each instruction group according to size of individual instruction fields and output each instruction field as a separate stream.

49. A program compression architecture as recited in claim 46 wherein the dictionary compressor is configured to construct tree structures for individual sequences of multiple instructions.

50. An embedded system comprising the program compression architecture of claim 42.

51. A computer comprising:
a memory;
a processing unit coupled to the memory; and
a program compression system stored in the memory and executable on the processing unit, the program compression system building a dictionary containing base entries representing individual instructions in a program and sequence entries representing corresponding sequences of multiple instructions in the program, the program compression system generating items that represent the program in terms of the base entries and the sequence entries.

52. A computer as recited in claim 51, wherein the program compression system is further configured to compress the dictionary.

53. A data structure stored on a computer readable medium, comprising:
base entries representing individual instructions in a program; and
sequence entries representing corresponding sequences of multiple instructions that are used multiple times in the program, the sequence entries referencing the base entries.

54. A data structure stored as recited in claim 53, further comprising items that reference the base entries and the sequence entries to represent instruction strings in the program.
